# EUROPÄISCHE PATENTSCHRIFT

(11) **EP 0 576 831 B1**
(45) Veröffentlichungstag und Bekanntmachung des Hinweises auf die Patenterteilung: **27.11.1996**
(21) Anmeldenummer: 93108538.5
(22) Anmeldetag: 27.05.1993
(51) Int. Cl.: H02J 7/02, H02J 7/10

(54) **Bleiakku-Ladeschaltung**
Lead-acid battery charging device
Dispositif de charge pour accumulateur au plomp

(30) Priorität: 29.06.1992 DE 4221299
(43) Veröffentlichungstag der Anmeldung: 05.01.1994
(73) Patentinhaber: ROBERT BOSCH GMBH, 70442 Stuttgart (DE)
(72) Erfinder: Ramme, Friedrich, W-1000 Berlin 62 (DE)

(56) Entgegenhaltungen:
- EP-A- 0 390 079
- WO-A-90/03059
- US-A- 4 389 608
- US-A- 4 897 591
- US-A- 5 192 905

## Beschreibung

Die Erfindung betrifft eine Bleiakku-Ladeschaltung.

Es ist eine Ladeschaltung bekannt (BOSCH-Funktelefon MT 9002 SN), die einen Bleiakkumulator unter Verwendung eines Aufwärts-Gleichspannungswandlers trotz schwankender Eingangsgleichspannung von zum Beispiel 8 bis 15 Volt ordnungsgemäß auflädt. Größere Schwankungen der Eingangsgleichspannung kann die bekannte Schaltung jedoch nicht ausregeln.

Aus der US 4 389 608 ist ein Batterieladesystem bekannt, bei dem ein Schaltregulator zur Steuerung des Batterieladestroms vorgesehen ist. Ladestrom und Ladespannung werden in einem Spannungs-/Strommeßschaltkreis jeweils mit einem Referenzwert verglichen und in Abhängigkeit dieses Vergleichs wird die Impulsbreite eines Impulsgenerators verändert, um den Ladestrom auf den gewünschten Sollwert zu regeln.

Aus der EP 0 390 079 A3 ist ein Schaltkreis zur Lieferung eines konstanten Ladegleichstroms bekannt, der eine Gleichspannungsquelle, einen Inverter zur Umwandlung der Gleichspannung der Gleichspannungsquelle in eine Wechselspannung und einen AC-DC-Umwandler zur Umwandlung der Wechselspannung in den Ladegleichstrom umfaßt. Der Inverter beinhaltet ein Schaltelement, das die Gleichspannung der Gleichspannungsquelle wiederholt unterbricht, um den Ladegleichstrom zu erzeugen, dessen Größe vom Schaltverhältnis des Schaltelements abhängt. Der Schaltkreis umfaßt auch einen Komparator, der den Wert des Ladegleichstroms mit einem vorgegebenen Referenzwert vergleicht. In Abhängigkeit des Vergleichs erzeugt ein Feed-back-controller zwei Signale mit Impulsen, deren Breite in Abhängigkeit des Vergleichsergebnisses des Komperators variabel einstellbar ist. In Abhängigkeit der Impulsbreite wird das Schaltverhältnis des Schaltelements eingestellt, so daß auf diese Weise der Ladestrom auf den vorgegebenen Referenzwert regelbar ist.

Der Erfindung liegt die Aufgabe zugrunde, eine Bleiakku-Ladeschaltung anzugeben, die für einen weiten Eingangsgleichspannungsbereich geeignet ist.

Erfindungsgemäß wird die Aufgabe durch die Merkmale des Anspruchs 1 gelöst.

Die erfindungsgemäße Schaltung zeichnet sich durch einen geringen Bauelementeaufwand und damit verbundenen Preisvorteil aus. Sie weist eine nahezu konstante, niedrige Verlustleistung auf, unabhängig vom ausgangsseitigen Arbeitspunkt.

Durch Verwendung des Gleichspannungswandlers ist die Ladeschaltung vorteilhaft für einen größeren Eingangsspannungsbereich einsetzbar. Außerdem ergibt sich eine genauere Ausregelung, wenn sowohl der Ladestrom als auch die Ladespannung geregelt wird. Zudem bilden der Pulsbreitenmodulator und der Spannungsregler jeweils einen Teil des Gleichspannungswandlers, so daß die Regelung des Ladestroms und der Ladespannung auf vorteilhafte Weise gemeinsam durch den Gleichspannungswandler erfolgen kann. Somit erfüllt der Gleichspannungswandler in der Anordnung gemäß Anspruch 1 in vorteilhafter Weise zugleich zwei Aufgaben.

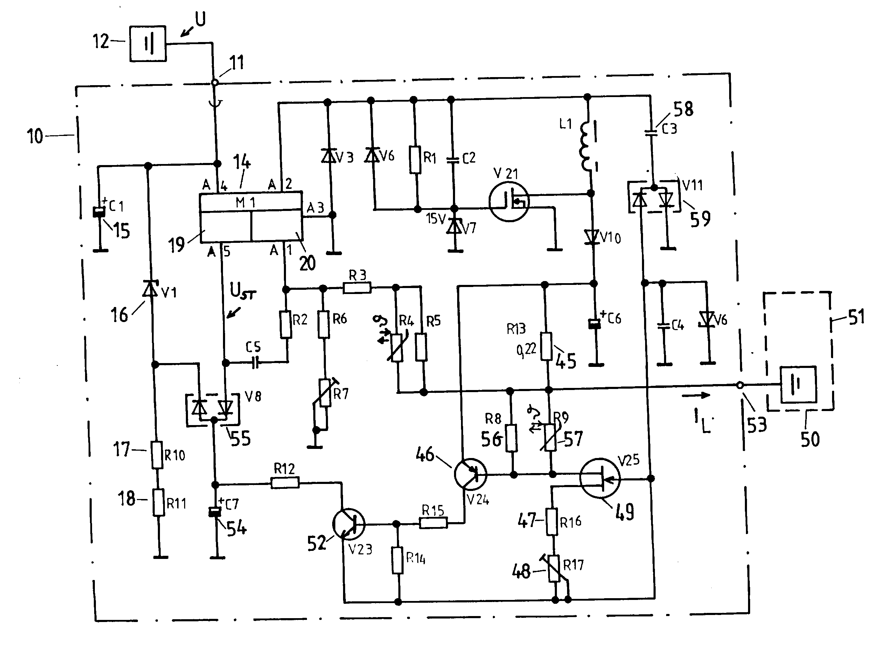

Ein Ausführungsbeispiel der Erfindung ist in der Zeichnung an Hand einer einzigen Figur dargestellt und wird nachfolgend näher erläutert.

Die Figur zeigt ein Schaltbild einer Bleiakku-Ladeschaltung zum Aufladen eines Akkumulators eines Mobiltelefons 51 aus einem Fahrzeugakkumulator. In der Figur bezeichnet 10 eine Ladeschaltung mit einem Eingangsanschluß 11 zum Anschließen einer Gleichspannungsquelle 12 mit schwankender Gleichspannung U , das ist z.B. ein in ein Kraftfahrzeug eingebauter Bleiakkumulator. Der Eingangsanschluß 11 ist mit einem vierten Anschluß A4 eines fünf Anschlüsse A1 bis A5 aufweisenden Gleichspannungswandlers 14, einem an Masse liegenden Kondensator 15 und mit einer Reihenschaltung aus einer Zenerdiode 16 und zwei Widerständen 17, 18 verbunden. Der Gleichspannungswandler 14 enthält einen Pulsbreitenmodulator 19 und einen Spannungsregler 20 zum Regeln der Ladespannung. Der Anschluß A1 des Gleichspannungswandlers 14 ist über eine Widerstandskombination mit dem Eingangsanschluß 53 eines aufzuladenden Bleiakkumulators 50 verbunden. Dazu parallel liegt ein Widerstand 45, der mit einem Transistor 46 verbunden ist. Zu dieser Verbindung parallel liegt eine Reihenschaltung der Widerstände 47, 48 und eines Transistors 49. Der Transistor 46 ist mit seinem Kollektor über einen Transistor 52 und weitere Schaltungsteile mit dem Anschluß A5 des Gleichspannungswandlers 14 verbunden.
Der Anschluß A2 ist über einen Kondensator 58 und eine Diodenschaltung 59 mit der Reihenschaltung der Widerstände 47, 48 und des Transistors 49 verbunden.

Die Schaltung übt folgende Funktion aus:
Einer Ausgangsspannung von etwa 15 V am Eingangsanschluß 53 steht ein Eingangsspannungsbereich von 10 V bis 35 V am Eingangsanschluß 11 gegenüber und kann bei der Wahl eines spannungsfesten Kondensators 15 bis 40 V erhöht werden. Eine Eingangsspannungsbegrenzung zu niederen Spannungen hin ist durch die Zenerdiode 16 und den Kondensator 54 und die Diodenantiparallelschaltung 55 gewährleistet.
Ein Betrieb im Bereich von etwa gleicher Ein- und Ausgangsspannung kennt wegen kontinuierlicher Variation des Tastverhältnisses fester Betriebsfrequenz keinen Umschaltpunkt oder -sprung.
Die Strombegrenzung arbeitet bis 0 V über den Pulsbreitenmodulator 19 des Gleichspannungswandlers 14. Damit wird eine über Strom und Spannung rechteckförmige Ausgangskennlinie sichergestellt.
Der Widerstand 45 dient als Strommeß-Shunt und liefert bei einem Ausgangsstrom von 1 A einen Spannungsabfall von 0,27 V. Dieser Spannungsabfall reicht nicht aus, um den Transistor 46 anzusteuern.
Dazu wird über die Widerstände 47 und 48 und den Transistor 49 an den Widerständen 56 und 57 eine Spannungsquelle erzeugt, deren Konstantspannung sich dem Spannungsabfall des Widerstandes 45 hinzuaddiert.
Dadurch wird der Transistor 46 bei Ausgangsströmen über 1 A leitend und steuert den Transistor 52 an. Dieser entlädt den Kondensator 54 und senkt die Steuerspannung des Pulsbreitenmodulators 19. Die Folge des nunmehr kleineren Tastverhältnisses ist, daß weniger Energie in die Speicherdrossel geladen wird.

Es wird immer genau die Energieladung umgesetzt, die zum Aufrechterhalten des Ausgangsstroms von 1 A erforderlich ist. Um selbst bei ausgangsseitigem Kurzschluß den Strom steuern zu können, arbeitet die Stromregelung an - 6,8 V.
Diese Hilfsspannung wird über die aus dem Kondensator 58 und der Diodenschaltung 59 gebildeten Ladungspumpe erzeugt.

Über die Reihenschaltung der Widerstände 17 und 18 und der Zenerdiode 16 wird der Betriebsspannungsbereich nach unten begrenzt.
Die Schaltung gewährleistet, daß zur Stromregelung auch der die Spannung regelnde Pulsbreitenmodulator 19 genutzt werden kann.

## Patentansprüche

1. Ladeschaltung für einen aus einer Gleichspannungsquelle (12) aufzuladenden Bleiakkumulator (51), wobei die Ladeschaltung einen integrierten Gleichspannungswandler (14) mit einem Pulsbreitenmodulator (19) und einem Spannungsregler (20) zum Regeln der Ladespannung enthält und eine durch den Pulsbreitenmodulator (19) erzeugte Regelung für den Ladestrom (I_{L}) vorgesehen ist, und wobei ferner in dem Ladestromkreis für den Bleiakkumulator (50) ein niederohmiger Widerstand (45) vorgesehen ist, dessen ladestromabhängiger Spannungsabfall die Größe einer Steuerspannung (U_{ST}) für den Pulsbreitenmodulator (19) bestimmt, und zu dem Spannungsabfall an dem niederohmigen Widerstand (45) eine konstante Gleichspannung addiert wird und die Summenspannung daraus einen Transistor (46) ansteuert, der, gegebenenfalls über einen weiteren Transistor (52), den Pulsbreitenmodulator (19) ansteuert.

2. Ladeschaltung nach Anspruch 1, dadurch gekennzeichnet, daß der Transistor (52) den Kondensator (54) entlädt und damit die Steuerspannung (U_{ST}) des Pulsbreitemodulators (19) senkt.

3. Ladeschaltung nach Anspruch 1 oder 2, dadurch gekennzeichnet, daß über einen Kondensator (58) und eine Diodenschaltung (59) vom Gleichspannungswandler (14) eine Hilfsspannung abgegriffen wird, um die Stromregelung bis zum Kurzschluß zu realisieren.

## Claims

1. Charging circuit for a lead storage battery (50) to be charged from a direct-voltage source (12), the charging circuit containing a built-in DC-to-DC converter (14) having a pulse-width modulator (19) and a voltage regulator (20) for regulating the charging voltage, and a regulation, generated by the pulse-width modulator (19), is provided for the charging current (I_{L}), and there furthermore being provided in the charging-current circuit for the lead storage battery (50) a low-resistance resistor (45) whose charging-current-dependent voltage drop determines the magnitude of a control voltage (U_{ST}) for the pulse-width modulator (19), and a constant direct voltage being added to the voltage drop across the low-resistance resistor (45) and the sum voltage thereof triggering a transistor (46) which triggers, optionally via a further transistor (52), the pulse-width modulator (19).

2. Charging circuit according to Claim 1, characterized in that the transistor (52) discharges the capacitor (54) and consequently reduces the control voltage (U_{ST}) of the pulse-width modulator (19).

3. Charging circuit according to Claim 1 or 2, characterized in that an auxiliary voltage is tapped off via a capacitor (58) and a diode circuit (59) from the DC-to-DC converter (14) in order to achieve the current regulation up to short circuit.

## Revendications

1. Dispositif de charge pour un accumulateur au plomb (50) à charger à partir d'une source de tension continue (12), dans lequel
le dispositif de charge contient un convertisseur de tension continue intégré (14) avec un modulateur de largeur d'impulsions (19) et un régulateur de tension (20) qui sert à régler la tension de charge, et il est prévu une régulation produite par le modulateur de largeur d'impulsions (19) pour l'intensité de charge (I_{L}), et dans lequel en outre il est prévu dans le circuit de charge pour l'accumulateur au plomb (50), une résistance de basse impédance (45) dont la chute de tension, qui est fonction du courant de charge, détermine la grandeur d'une tension de commande (U_{ST}) pour le modulateur de largeur d'impulsions (19), et on additionne à la chute de tension sur la résistance de basse impédance (45), une tension continue constante, la somme des tensions qui en résulte activant un transistor (46) qui, le cas échéant au moyen d'un autre transistor (52), commande le modulateur de largeur d'impulsions (19).

2. Dispositif de charge selon la revendication 1,
caractérisé en ce que
le transistor (52) décharge le condensateur (54) et, de cette façon, baisse la tension de commande (U_{ST}) du modulateur de largeur d'impulsions (19).

3. Dispositif de charge selon la revendication 1 ou 2,
caractérisé en ce que
l'on prélève au moyen d'un condensateur (58) et d'un circuit de diodes (59) du convertisseur de courant continu (14), une tension auxiliaire pour réaliser la régulation du courant jusqu'au court-circuit.
